Europäisches Patentamt

(19) European Patent Office

Office européen des brevets

(11) Publication number: **0 052 428**
**A1**

(12) **EUROPEAN PATENT APPLICATION**

(21) Application number: **81304877.4**

(22) Date of filing: **19.10.81**

(51) Int. Cl.³: **H 02 G 3/24**
**H 02 G 3/04**

(30) Priority: **20.10.80 GB 8033784**
**27.10.80 GB 8034567**
**26.11.80 GB 8037912**

(43) Date of publication of application:
**26.05.82 Bulletin 82/21**

(84) Designated Contracting States:
**AT BE CH DE FR IT LI LU NL SE**

(71) Applicant: **BICC Limited**
**21, Bloomsbury Street**
**London, WC1B 3QN(GB)**

(72) Inventor: **Marsh, James**
**28 Mossbank Road Moss Bank**
**St. Helens Merseyside(GB)**

(72) Inventor: **Delhees, Peter**
**63 Beauclair Drive**
**Liverpool 15 Merseyside(GB)**

(74) Representative: **Poole, Michael John et al,**
**BICC Limited Patents Department 38 Wood Lane**
**London, W12 7DX(GB)**

(54) **A spacer for supporting a heat detector cable.**

(57) A spacer (1) for a heat detecting cable (14) has a moulded column (2) with a cross-section formed by a number of arms (3, 4, 5, 6) projecting from a web or centre. A tie (15) on the column or a slot (46) in the column holds the detector cable against the column and spaced from the connection with a cable tray. The column is preferably cruciform in cross-section, but alternatively can be H–, T–, Y–, or B– shaped.

Fig.1.

EP 0 052 428 A1

Croydon Printing Company Ltd.

## "A Spacer for Supporting a Heat Detector Cable"

The present invention relates to a spacer to hold a heat detector cable at a distance from a cable tray.

When vertically spaced cable trays are used in certain circumstances, e.g. to hold power cables in generating stations or oil rigs, in order that heat losses from cables, including heat rising convectively from cables in lower trays, do not produce over-heating, heat detecting cables are often installed between (and above) the cable trays. These cables are designed to short circuit if a fire occurs or the local air temperature at any point reaches a critical level and then to trigger an alarm system. The heat detecting cables are supported either below or above the trays, typically by downwardly extending tubes about each of which the cable is wound once or twice. This arrangement wastes a lot of cable, is slow and inconvenient to erect and change; moreover it is hard to re-attach a cable which becomes detached from a tube.

An alternative support for the heat detecting cable is a steel strip and cleat hanging from an upper tray. This arrangement can interfere with operation by putting the detector in effective thermal contact with the metal of the cable tray; moreover the detector can readily swing, risking abrasion.

The present invention provides a spacer for supporting a heat detector cable comprising: a moulded column with a cross-section formed by a plurality of arms projecting outwardly from a web or a centre; means to hold a detector against the column; and, spaced from the holding means, means to secure the spacer to a cable tray.

Preferably the cross-section of the column is such that it can be moulded in a two-part mould. It may be generally X, H, T, Y (preferably equiangular), or V-shaped; the arms need not be of equal length. Some other suitable cross-sections will be described later.

The arms may be straight or they may incorporate simple curves as seen in cross-section; preferably they taper, at least slightly, from the root towards the tip.

The holding means may be a cable tie, whose head is either separate or integral with the spacer. Alternatively the holding means may be an inclined openended slot in one arm of the column; in this case the arm preferably adjoins two arms that are coplanar and project away from each other.

Preferably the securing means is a T-shaped member extending from the column to lock into an aperture in a cable tray.

A spacer embodying the present invention can extend upwardly from the tray to which it is attached, in order to support the heat detector cable above that tray.

In order that the invention may more readily be understood, a description is now given, by way of example only, reference being made to the accompanying drawings, in which:

Figure 1 is an elevational view of a spacer of the present invention holding a cable;

Figure 2 is a view in the direction indicated by arrows II-II in Figure 1;

Figure 3 is a view in the direction indicated by arrows III-III in Figure 1;

Figure 4 is a plan view of a modification of the spacer in Figure 1;

Figure 5 is an elevational view of an adaptor for use with the spacer shown in Figure 1;

Figure 6 is a view in the direction indicated by arrows VI-VI of Figure 5;

Figure 7 is a plan view of a mould-part of the adaptor shown in Figure 5;

Figure 8 illustrates another form of adaptor;

Figure 9 illustrates a modified form of the adaptor shown in Figure 8;

Figure 10 is a perspective view of another spacer of the present invention; and

Figure 11 (a) to (i) illustrates alternative cross-sections of a column in a spacer embodying the present invention.

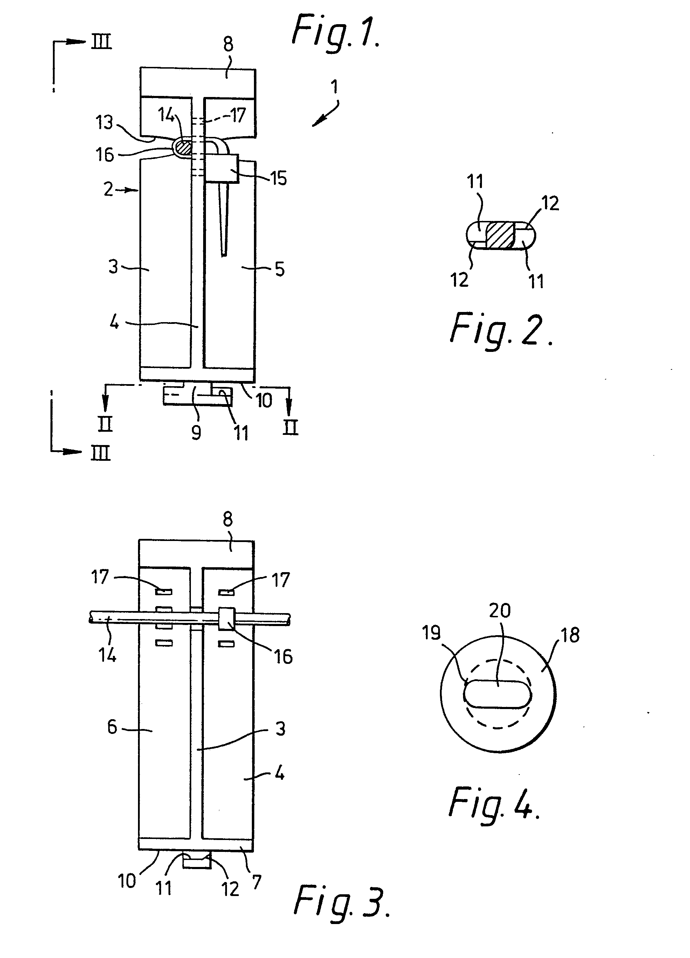

The spacer (generally designated 1) illustrated in Figures 1 to 3 consists of a one-piece polypropylene moulding and a separate cable tie. The moulding has a column 2 with a cruciform section formed by mutually perpendicular arms 3, 4, 5, 6. Each end of the column 2 includes a circular plate 7, 8 with a radius equal to the length of each arm.

A T-shaped foot 9 extends from the outer surface 10 of the end of the plate 7 and has a bearing surface 11 (facing and generally parallel to plate 7) with ridge 12 extending along the length of surface 11 adjacent one edge. Thus the spacer 1 can be securely held in an elongate aperture of a cable tray by positioning the foot 9 within and extending longitudinally of the aperture in the tray and then rotating the spacer 1 until foot 9 extends transversely of the aperture, thereby gripping the tray between plate surface 10 and bearing surface 11.

Arm 3 has a U-shaped notch 13 in which a heat detecting cable 14 is held by a separate cable tie 15 whose toothed strap 16 passes over cable 14 and through two of a number of slots 17 in arm 4 and is locked in the tie head. As any two of the slots 17 can be used and as the size of the holding loop of tie 15 is greatly variable, a very wide range of cable sizes can be held securely. The tie 15 also enables a wide range of clamping forces to be achieved.

A notch 13 on arm 5, and a series of slots 17 on arm 6, are also provided in order to enable a cable to be alternatively held on the other side of spacer 1.

A second cable tie can be passed through two of the slots 17 in arm 6 to hold cable 14 even more securely.

The illustrated spacer 1 can be modified to have a single notch and one series of slots, or to have two notches of differing sizes thereby increasing the range of cable sizes which can be accommodated and/or to have the two notches longitudinally spaced apart on column 2. In another modification the column 2 and end plates 7, 8 are moulded separately and then assembled by ultrasonic welding or adhesion. In another modification, the column 2 and end plates 7, 8 are moulded on a single unit, and foot 9 is subsequently attached by ultrasonic welding or adhesion thereby enabling a range of sizes and shapes of foot to be available.

In use, a plurality of these spacers 1 are attached along the length of a cable tray at a spacing of about 2 metres and then heat detector cable 14 is secured to each of the spacers in turn so that it is held parallel to, but spaced from, the cable tray and its contents. The spacers 1 can extend either upwardly or downwardly from the cable tray with which they engage. When a spacer extends upwardly it can serve the additional purpose of defining a ventilation space between adjacent cables on the tray.

The cable 14 can be quickly attached to and detached from the spacer 1, and more than one cable 14 can be supported by each spacer 1.

In a modified spacer, shown in Figure 4, outer surface 18 of end plate 8 has an aperture 19 (of shape and dimensions comparable to the profile shown in Figure 2 of foot 9) which opens into a circular space 20 of diameter equal to the length of that profile. Thus two modified spacers can be securely joined together by placing the foot 9 of one through aperture 19 and into space 20 of the other and then rotating them relatively through 90 degrees so that surfaces 10 and 11 of the one spacer clamp between part of surface 13 of the other. The spacers can be re-dily detached by anoaher relative rotation through 90 degrees. Alternatively, two spacers can be longitudinally joined by cutting off foot 9 of one to produce a flat surface (or foot 9 and the end of plate 7) and then ultrasonically welding it to end plate 8 of the other spacer.

Spacers are preferably joined so that adjacent ones have orientations about the longitudinal axis differing by 90 degrees so that the presence of notches 13 do not produce any appreciable cumulative weakness, and the relative positions of the slot 20 and foot 9 in the Figure 4 version should be appropriately arranged.

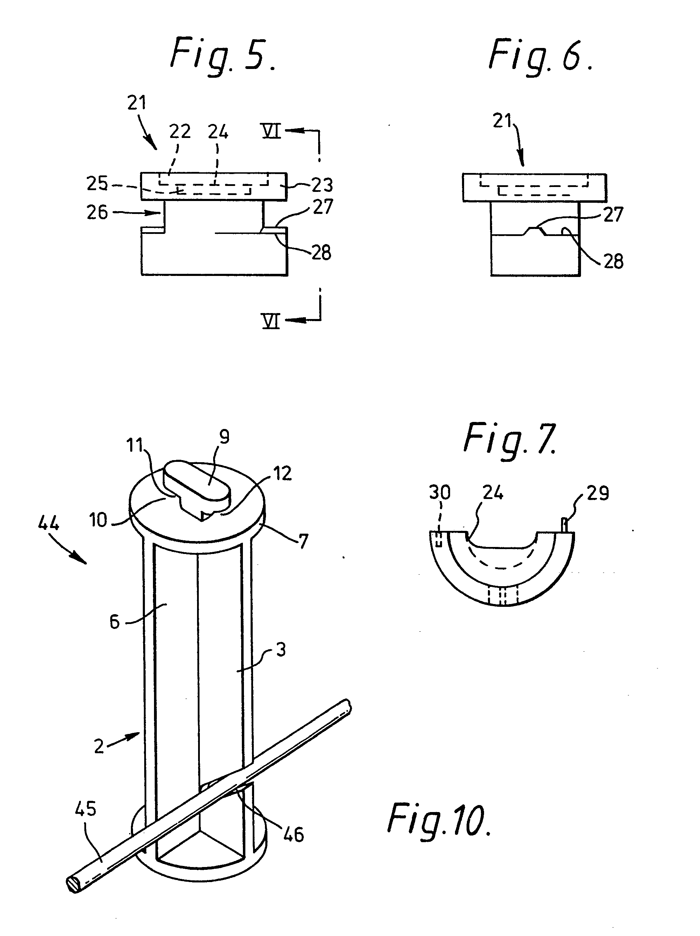

Figures 5 and 6 show an adaptor 21 to permit spacer 1 to engage with a lipped channel whose width is greater than the length of the foot profile. Thus adaptor 21 has a seat 22 recessed in the upper surface of plate 23 to accommodate end plate 7, and an aperture 24 in seat 22 which communicates with a circular space 25 thereby enabling a locking action between adaptor 21 and spacer 1. Extending from the lower surface of adaptor plate 23 is a T-shaped section 26 similar in shape but larger than foot 9, except that ridges 27 extend along the central axis of bearing surface 28. Adaptor 21 is attached to a channel by placing its T-shaped section 26 between the channel lips to extend longitudinally along the channel and then rotating the adaptor 21 so that the channel lips are clamped between the lower surface of plate 23 and bearing surface 28.

Adaptor 21 can be made as a one-piece moulding utilising sliding cores. Alternatively two parts can be moulded separately each with a pin 29 and recess 30 to fit snugly with a co-operable element on the other part (see Figure 7); the two parts can be joined by ultrasonic welding or by adhesion.

A modified adaptor (not illustrated) has its T-shaped section 26 extending parallel to the longitudinal axis of aperture 24, so that when fitted between spacer 1 and a channel the spacer 1 is in an orientation differing by 90 degrees thereby enabling it to support cables extending transversely of the channel. This effect can alternatively be achieved by manufacturing spacer 1 with the profile foot 9 rotated through 90 degrees.

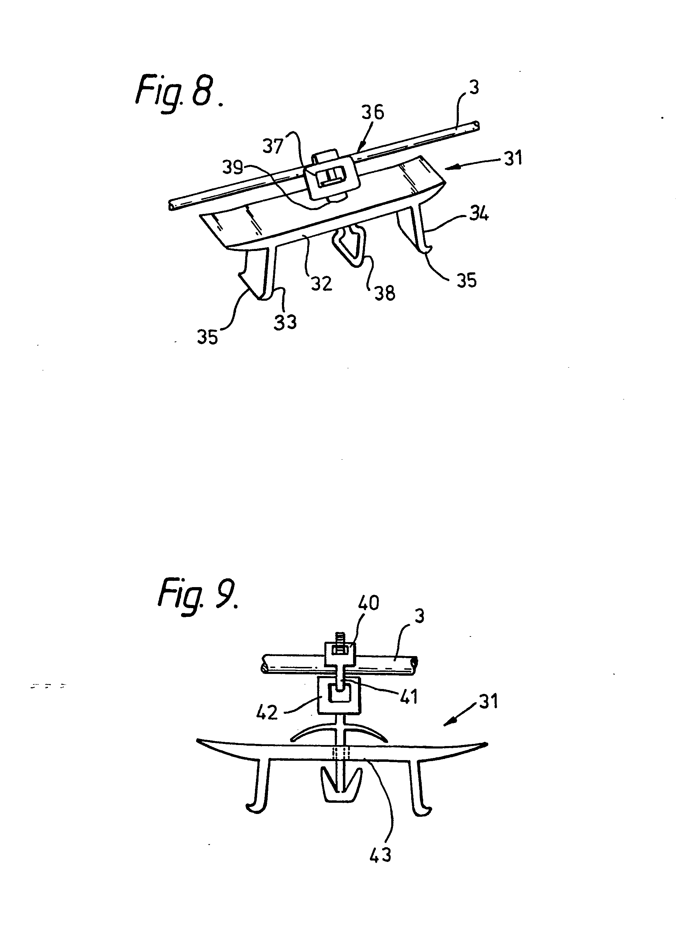

In Figure 8 a resilient, polypropylene adaptor 31 has a web 32 from one side of which perpendicularly project spaced legs 33, 34 each having at its end an outwardly extending rim 35 to pass under a flange of the channel; each leg, corresponding rim and its facing web section form a U-shaped portion. A cable support 36 has a tie 37 integral with an arrow head 38 which is snap-fitted in an aperture 39 of web 32.

Figure 9 illustrates adaptor 31 used with a cable tie 40 (of simpler form to that tie shown in Figure 8), whose strap 41 loops through a separate clip 42 fitted through aperture 43 of the adaptor.

Any of the above described adaptors can be used to connect a spacer or support on to a cable tray whose elongate apertures are too wide for direct engagement.

Any of the above adaptors can also be modified so that the spacer or support can be fitted to the aperture of a cable tray or to a channel too small for direct engagement Any of the above adaptors can be made of P.V.C.

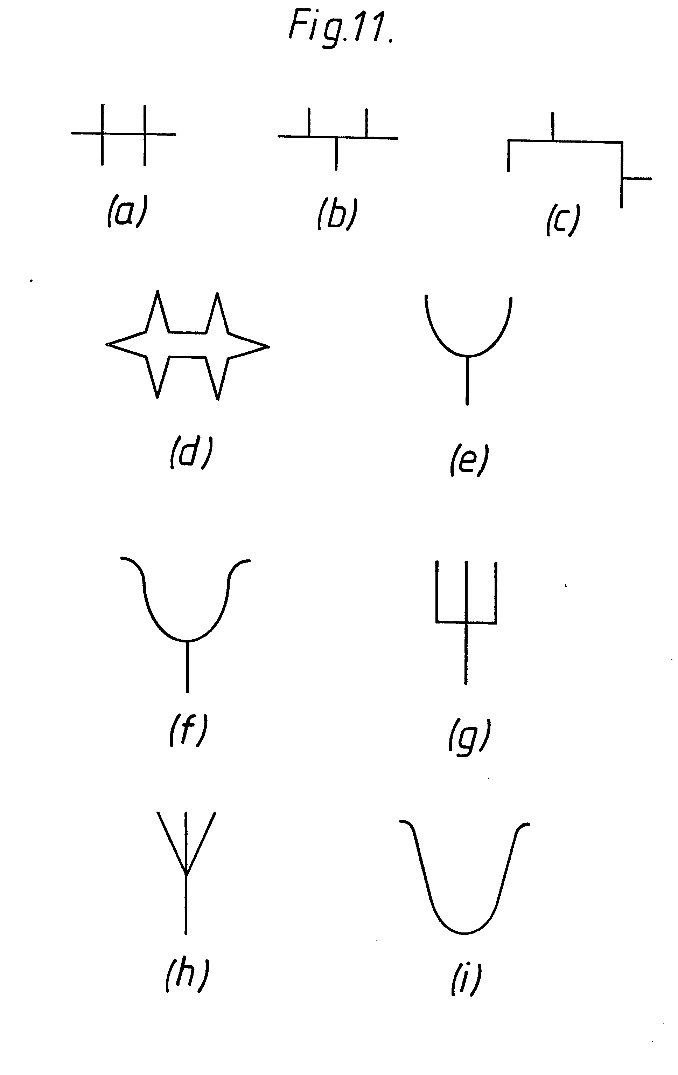

In Figure 10 features of spacer 44 which are identical to those of spacer 1 are given the same numerals; this Figure illustrates a simplified form of spacer which is designed for a specific task, that of holding a heat detector cable 45 of a given diameter or width below a cable tray. Spacer 44 is a one-piece moulding of polypropylene plastics material; arm 3 has a single upwardly extending slot 46 of a width sufficient to snugly hold cable 45 and inclined at 45 degrees to the longitudinal axis of column 2.

Spacer 44 can be modified to hold cable 45 above a cable tray by having a slot 46 again inclined at 45 degrees to the axis of column 2 but this time away from end plate 7. An advantageous method of manufacturing spacer 44 is to form a basic moulding with no slots in any arm, and to subsequently cut slot(s) of whatever size and inclination is appropriate.

Other suitable forms of the column section are shown in Figure 11(a) to (i).

The spacers and adaptors described above are cheap, easily manufactured components providing the basis of a strong cable support installation which can be quickly and easily assembled, dismantled and changed.

The adaptors described above can similarly be used with spacer 44.

CLAIMS

1.      A spacer for supporting a heat detector cable comprising:  a moulded column with a cross-section formed by a plurality of arms projecting outwardly from a web or a centre;  means to hold a detector against the column;  and, spaced from the holding means, means to secure the spacer to a cable tray.

2.      A spacer according to Claim 1, wherein at least some of the arms are tapered from the root towards the tip.

3.      A spacer according to Claim 2, wherein the arms form at least two mutually perpendicular limbs.

4.      A spacer according to Claim 2 or Claim 3, wherein the section is cruciform.

5.      A spacer according to any one of the preceding claims, wherein the holding means comprises a separate cable tie.

6.      A spacer according to any one of the Claims 1 to 4, wherein the holding means is integral with the column.

7.      A spacer according to Claim 6 wherein the holding means comprises a slot within, and inclined to the length of, the column.

8.      A spacer according to any one of the preceding claims, wherein the securing means is a T-shaped member extending from the column to lock into an aperture in a cable tray.

9.      A spacer for supporting a heat detector cable substantially as hereinbefore described with reference to and as illustrated in (i) Figures 1, 2 and 3 or (ii) Figures 1, 2, 3, and 4, or (iii) Figure 10 or (iv) Figures 4 and 10 of the accompanying drawings.

10. A spacer according to Claim 9 modified as shown in any one of Figures 11 (a) to 9 (i)

Fig.1.

Fig.2.

Fig.4.

Fig.3.

**Fig. 5.**

**Fig. 6.**

**Fig. 7.**

**Fig. 10.**

Fig. 8.

36

37

39

3

31

34

35

32  38

35  33

35

Fig. 9.

40

3

41

42

31

43

# Fig.11.

(a)

(b)

(c)

(d)

(e)

(f)

(g)

(h)

(i)

**EUROPEAN SEARCH REPORT**

Application number

EP 81 30 4877

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | <u>GB - A - 972 995</u> (RAYMOND) <br> * Page 1, lines 57-76; page 2, lines 16-19; figures 1,2 * <br><br> -- | 1,5,8, 9 | H 02 G 3/24 <br> 3/04 |
| A | <u>FR - A - 1 577 684</u> (FIRTH) <br> * Page 3, lines 4-19; figures 1-3 * <br><br> -- | 1,6,8 10 | |
| A | <u>FR - A - 1 029 267</u> (ODEGAARD) <br> * Page 1, left-hand column, last paragraph; fight-hand column, paragraph 1; figures 1,4 * <br><br> -- | 1,5,7, 9 | TECHNICAL FIELDS SEARCHED (Int.Cl. ³) <br><br> H 02 G 3/00 |
| A | <u>FR - A - 2 232 853</u> (S.I.C.A.M.E.) <br> * Page 6, lines 1-12; figures 1-3 * <br><br> -- | 1,5,9 | |
| A | <u>FR - A - 1 449 898</u> (S.I.C.A.M.E.) <br> * Page 3, figures 5,6 * <br><br> -- | 1,5,9 | |
| A | <u>AU - B - 495 138</u> (WOLTERS) <br> * Page 6, paragraph 11 - page 7, paragraph 4; figures 6,8 * <br><br> -- | 1,6,9 | CATEGORY OF CITED DOCUMENTS |
| A | IBM TECHNICAL DISCLOSURE BULLETIN, vol. 17, no. 12, May 1975, New York, US <br> LISCIA "Combination cable Clamp/Standoff" page 3555 <br> * Lines 4,5; figures * <br><br> ---- | 7,9 | X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons <br><br> &: member of the same patent family, corresponding document |

| | The present search report has been drawn up for all claims | | |
|---|---|---|---|
| Place of search <br> The Hague | Date of completion of the search <br> 12-02-1982 | Examiner <br> TIELEMANS | |

EPO Form 1503.1 06.78